# EUROPÄISCHE PATENTSCHRIFT

(11) **EP 1 381 797 B1**
(45) Veröffentlichungstag und Bekanntmachung des Hinweises auf die Patenterteilung: **21.07.2004**
(21) Anmeldenummer: 02730160.5
(22) Anmeldetag: 16.04.2002
(51) Int. Cl.: F16H 57/04

(54) **ÖLVERSORGUNGSEINRICHTUNG**
OIL SUPPLYING DEVICE
DISPOSITIF D'ALIMENTATION EN HUILE

(30) Priorität: 21.04.2001 DE 10119573
(43) Veröffentlichungstag der Anmeldung: 21.01.2004
(73) Patentinhaber: ZF FRIEDRICHSHAFEN AG, 88038 Friedrichshafen (DE)
(72) Erfinder: BATHE, Kurt, 14772 Brandenburg (DE); BLECHSCHMIDT, Dirk, 14770 Brandenburg (DE); CIZMARIK, Jens, 14806 Belzig (DE)
(86) Internationale Anmeldenummer: PCT/EP2002/004177
(87) Internationale Veröffentlichungsnummer: WO 2002/086354

(56) Entgegenhaltungen:
- DE-A- 19 602 041
- GB-A- 2 166 816
- US-A- 4 329 887

## Beschreibung

Die Erfindung betrifft eine Ölversorgungseinrichtung für Getriebe nach dem Oberbegriff von Anspruch 1.

In Getrieben und insbesondere in Handschaltgetriebe hat die Beölung der Verzahnungen, Lagerungen und der sich auf und in Wellen befindlichen Losradlagerungen durch die komplexe Bauweise der Getriebe eine besondere Bedeutung. Einerseits muss eine ausreichende Beölung der Verzahnungen und der Lagerungen erreicht werden, andererseits soll eine möglichst kleine Ölmenge ein kleines Schleppmoment zur Erreichung einer guten Schaltbarkeit gewährleisten, was besonders in Handschaltgetrieben einen großen Einfluss auf die Komfortbewertung hat. Ebenso sollen die Öltemperaturen moderat sein und die Ölversorgung des Rückwärtsgangrades sowie die Kaltschaltbarkeit sollen gewährleistet sein. Zur Lösung der damit zusammenhängenden Problemstellungen werden verschiedene Arten von Ölpumpen, hohlgebohrten Wellen und Ölleitungen eingesetzt, oder es werden Ölleitbleche, Ölbohrungen oder erhöhte Ölstände im Getriebe verwendet. Beim Eintauchen der Zahnräder in das Öl wird dieses willkürlich im Getriebe in Abhängigkeit von Drehzahl, Gang und Fahrzustand des Fahrzeugs verteilt. Durch feststehende Ölleiteinrichtungen wird versucht, das Öl gezielt zu leiten. Bei einer Schrägverzahnung der Bauteile erfolgt eine Förderung des Öls in der Ölwanne in der durch die Schrägverzahnung vorgegebene Richtung, so dass sich eine unterschiedliche Anhäufung von Öl in der Ölwanne ergibt.

So ist beispielgebend aus der DE 195 38 192 A1 eine Ölversorgungseinrichtung bekannt geworden, die als eine Ölauffangeinrichtung, Ölreservoir und Ölzuführeinrichtung ortsfest im Getriebegehäuse angeordnet ist. Über einen großen Bereich aufgefangenes Öl in einem anderen großflächigen Bereich zu verteilen lässt sich mit dieser Anordnung nicht gewährleisten.

Aus der DE 196 02 041 A1 die als nächstliegender Stand der Technik angesehen wird, ist eine Schaltgabel für ein Wechselgetriebe bekannt geworden, die eine Einrichtung zum Zuleiten von Spritzöl zu der Synchronisiereinrichtung aufweist, die mit der Schaltgabel betätigt wird. Hierbei soll lediglich eine Überbelastung der Synchronisiereinrichtung dadurch vermieden werden, dass ein gerichteter Ablauf in der Einrichtung vorgesehen ist, der beim Ansynchronisieren der Synchronisiereinrichtung diese mit zusätzlichem Schmieröl versieht. Die Einrichtung zum Zuleiten von Spritzöl dient nicht einer besseren Beölung einer Vielzahl von Bauteilen im Getriebe.

Der Erfindung liegt die Aufgabe zugrunde, bei einem Getriebe, insbesondere bei einem Kraftfahrzeughandschaltgetriebe, die Beölung von Bauteilen zu verbessern.

Die Aufgabe wird gelöst mit einer Ölversorgungseinrichtung mit den Merkmalen des Anspruchs 1.

Erfindungsgemäß wird in einem Fahrzeuggetriebe eine Ölversorgungseinrichtung vorgeschlagen, mit der das vorhandene Öl an die zur Beölung vorgesehenen Stellen gebracht wird. Das Fahrzeuggetriebe weist ein Getriebegehäuse auf mit auf Wellen angeordneten Rädern, die Verzahnungen aufweisen, mit Lagerungen, in denen Räder und Wellen drehbar gelagert sind, und mit einer Schalteinrichtung, die dazu geeignet ist, die Räder und Wellen zu einer Drehmomentübertragung zu verbinden. Es ist eine Ölauffangrinne vorgesehen, die auf bewegbaren Elementen der Schalteinrichtung angeordnet ist und die sich mit den Elementen der Schalteinrichtung bewegt. Die Ölauffangrinne erstreckt sich im wesentlichen durch den gesamten Räder aufweisenden Teil im Getriebe und weist wenigstens eine Öffnung auf, die bei den Bewegungen der Elemente der Schalteinrichtung Bereiche innerhalb des Getriebegehäuses überstreicht, an denen die Lagerungen, Verzahnungen oder Synchronisierungen angeordnet sind. In einer besonders vorteilhaften Ausgestaltung ist im Getriebegehäuse im Bereich einer Ölwanne eine Trenneinrichtung, beispielsweise in Form eines Schottblechs, vorgesehen, die einen ersten Bereich mit einem geringeren Ölspiegel von einem zweiten Bereich mit einem höheren Ölspiegel trennt. Die Ölauffangrinne fördert aufgespritztes Öl aus dem ersten Bereich mit dem geringeren Ölspiegel in den zweiten Bereich mit dem höheren Ölspiegel, weil im ersten Bereich Räder mit größeren Durchmesser tiefer in das Öl eingreifen können und in dem zweiten Bereich Zahnräder mit weniger großem Durchmesser dort weniger tief in das Öl eingreifen können. In einer weiteren Ausgestaltung ist wenigstens die eine der Öffnungen der Ölauffangrinne so angeordnet, dass sie wenigstens in einer definierten Position ihrer Bewegung Öl in eine zweite Ölauffangrinne abgeben kann, die bewegungsfest im Getriebegehäuse oder an einem Schaltungselement angeordnet ist. Vorteilhaft weist die Ölauffangrinne ein Gefälle auf, so dass das Öl in Normallage des Getriebes schwerkraftunterstützt in der Ölauffangrinne fließen kann. In einer Ausführungsform erfolgt die Bewegung der Ölauffangrinne in Längsrichtung des Getriebegehäuses entlang der Drehachsen der Wellen und in einer anderen Ausführungsform erfolgt die Bewegung der Ölauffangrinne rechtwinklig zur Längsrichtung des Getriebegehäuses und somit rechtwinklig zu den Drehachsen der Wellen. Eine Ausgestaltung zeigt die Ölauffangrinne auf einer in Längsrichtung des Getriebes bewegbaren Schaltwelle montiert, und eine andere Ausgestaltung zeigt die Ölauffangrinne auf einem Sperrblech montiert, das zur Sperrung von nicht zum Schalten ausgewählter Schaltgabeln der Schalteinrichtung vorgesehen ist und das rechtwinklig zur Längsrichtung des Getriebes bewegbar ist. Die Ölauffangrinne wird vorteilhafterweise aus einem widerstandsfähigen Kunststoff gebildet, der ein geringes Gewicht aufweist und beispielsweise als ein Spritzgussteil in entsprechende Aufnahmen an der tragenden Schalteinrichtung selbsthaltend eingerastet werden kann. Außer der Einbindung eines Schottblechs in die Ölwanne kann auch die Veränderung der Gehäusekontur vorgenommen werden, was zu einer Trennung verschiedener Ölräume führt. Hierdurch wird im dynamischen Betrieb des Getriebes ein erhöhter Ölspiegel erzeugt, damit auch die Verzahnungen mit kleinen Teilkreisdurchmessern ausreichend mit Öl versorgt werden können, um Schäden an den Verzahnungen zu vermeiden. Damit das Öl, das im Bodenbereich der Ölwanne durch die Gehäuseausbildungen und durch die Schrägverzahnungen der Zahnräder im Getriebegehäuse beispielsweise nach vorn transportiert wird, beim Hochschleudern durch die Verzahnungen wieder gezielt in den hinteren Raum hinter das Schottblech gefördert werden kann, wird die Ölauffangrinne in Form einer aktiven Rinne im Bereich oberhalb der Zahnräder angebracht. Die Ölauffangrinne macht die Bewegung von Schaltelementen aktiv mit, sammelt Spritzöl auf und lässt es in vorgegebene Richtungen abfließen, wobei an der Ölauffangrinne gezielte Öffnungen bzw. Abgänge eingebracht sind, um den Ölstrom auf bestimmte Rädergruppen oder Bauteile wie Synchronisierungen, Lager oder Räder zu lenken. Damit wird eine ausreichende Beölung des Getriebes erreicht. Durch die Bewegung des Trägerbauteils, auf der sich die aktive Ölauffangrinne befindet, werden in Abhängigkeit von der jeweiligen Gangstellung der Schalteinrichtung ganze Bereiche überstrichen und mit Öl versorgt.

Die Erfindung wird anhand einer Zeichnung näher beschrieben.
Es zeigen:
- Fig. 1: eine Seitenansicht eines Getriebegehäuses mit Ölauffangrinne und Schottblech;
- Fig. 2: einen Schnitt durch eine Schalteinrichtung mit Ölauffangrinne;
- Fig. 3: eine Schrägansicht mit Ölauffangrinne auf einem Verriegelungsblech und

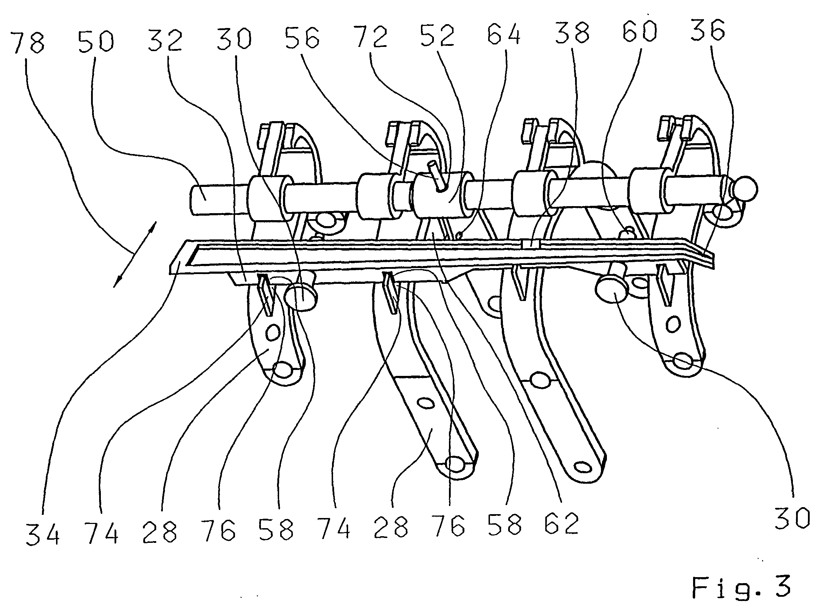

- Fig. 3: eine Schrägansicht mit Ölauffangrinne auf einer Schaltwelle.

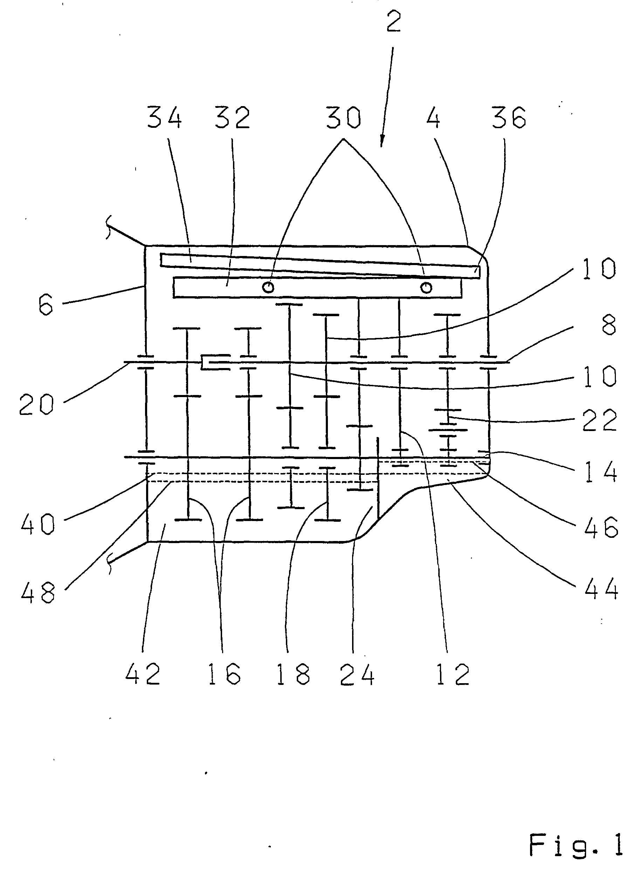

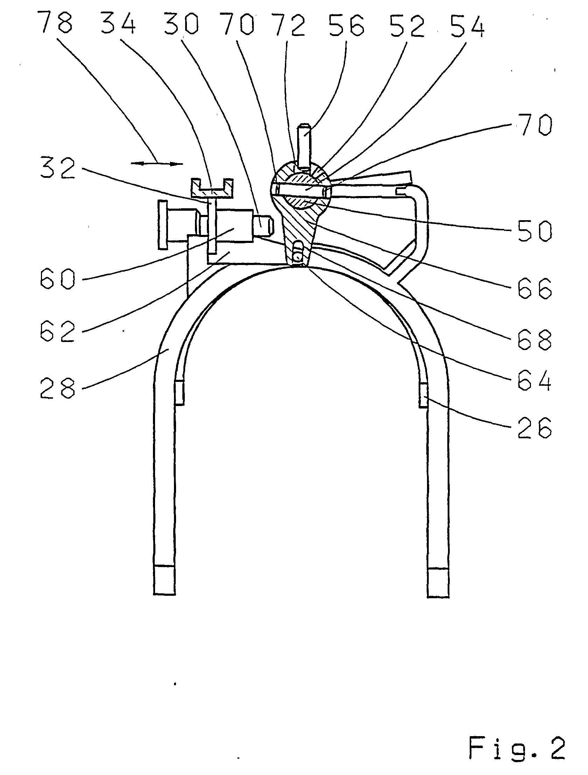

In der Fig. 1 ist ein Schaltgetriebe 2 gezeigt, das ein Gehäusehinterteil 4 mit einem angehobenen Boden und ein Gehäusevorderteil 6, eine Hauptwelle 8 mit Festrädern 10 und Losrädern 12, eine Vorgelegewelle 14 mit Festrädern 16 und Losrädern 18, eine Antriebswelle 20, ein Rückwärtsgangzwischenrad 22 und ein Schottblech 24 umfasst. Oberhalb der Hauptwelle 8 befindet sich die in den Gehäuseteilen 4 und 6 über die Lagerbolzen 26 gelagerten Schaltschwingen 28 (Fig. 2) und das in den Führungsbolzen 30 geführte Sperrblech 32. Auf dem Sperrblech 32 ist eine in Richtung auf den Gehäusehinterteil 4 geneigte Ölauffangrinne 34 aufgesetzt, die Ölabgänge 36 und 38 aufweist. Die Ölspiegelhöhe in einer Ruhelage 40 wird bestimmt durch die Ölmenge und die Höhe des Schottblechs 24 und ist in der gezeigten Ausführung so gestaltet, dass in den beiden Ölbereichen oder Ölräumen 42 und 44 Gleichstand besteht. Im Betrieb des Schaltgetriebes 2 wird das Öl durch die verschiedenen Räder 10, 12, 16, 18 auf den Wellen 8, 14, 20 nach oben geschleudert. Die Schrägverzahnung der Räder 10, 12, 16, 18 fördert das Öl im Betrieb nach vorne in den Gehäusevorderteil 6. Dort greifen im Ölbereich 42 die größeren Zahnräder 16, 18 tiefer in das Öl ein und können genügend Öl hoch schleudern. Im Gehäusehinterteil 4 mit dem angehobenen Boden greifen im Ölbereich 44 die dort angeordneten Zahnräder der Vorgelegewelle nicht so tief in das dort vorhandene Öl ein und können demzufolge auch nicht so viel Öl hoch schleudern. Von der aktiven Ölauffangrinne 34 wird das aufgeschleuderte Öl im Gehäusevorderteil 6 aufgefangen und aufgrund der Neigung in Richtung auf das Gehäusehinterteil 4 transportiert und dort über die eingebrachten Ölabgänge 36 und 38 gezielt in bestimmten Bereichen, entsprechend der jeweiligen Schaltstellung, zur Ölversorgung abgegeben. Dadurch steigt im Betrieb der Ölspiegel 46 hinter dem Schottblech 24 im Ölbereich 44 an. Ein schneller Rückfluss nach vorn wird durch das Schottblech 24 verhindert. Im angestiegenen Ölspiegel 46 können die Zahnräder im Ölbereich 44 jetzt tiefer eintauschen und erhalten eine ausreichende Ölversorgung. Der Ölspiegel 48 im Ölbereich 42 sinkt etwas, ist aber für die dort zu beölenden Verzahnungen und Lagerungen ebenfalls ausreichend.

Die Einstangen-Schalteinrichtung für das Handschaltgetriebe weist eine zentrale Schaltwelle 50 auf, die drehbar und axial verschiebbar im Getriebegehäuse 4, 6 gelagert ist. Die Verriegelungseinrichtung weist ein Sperrblech 32 auf, zwei Führungsbolzen 30, eine Hebelnabe 52, einen Mitnehmerstift 54 und einen Arretierstift 56. Beim dargestellten Ausführungsbeispiel ist das Sperrblech 32 mit vier Aussparungen 58, mit zwei Führungshülsen 60 und mit einem starren Schubglied 62 versehen, die jeweils senkrecht zum Sperrblech 32 angeordnet sind. Das Sperrblech selbst ist parallel zur zentralen Schaltwelle 50 angeordnet und auf den beiden Führungsbolzen 30, welche fest mit dem Gehäuse 4, 6 verbunden sind, verschiebbar gelagert. Das starre Schubglied 62 besitzt an seinen einem Ende einen zum Sperrblech 32 parallelen Bolzen 64. Koaxial und verschiebbar zur zentralen Schaltwelle 50 ist die Hebelnabe 52 vorgesehen, die zusammen mit einem Verlängerungsteil 66 einen Hebel bildet; am unteren, freien Ende des Verlängerungsteils 66 ist ein Langloch 68 vorgesehen, in welches der Bolzen 64 des Sperrblechs 32 eingreift. Die Hebelnabe 52 weist an ihrem Innendurchmesser ein oder zwei durchgängige Nuten 70 auf, in die der quer zur zentralen Schaltwelle 50 angeordnete Mitnehmerstift 54 eingreift. Am Außendurchmesser der Hebelnabe 52 befindet sich eine quer zur zentralen Schaltwelle 50 verlaufende bogenförmige Aussparung 72, in die der gehäusefest angeordnete Arretierstift 56 eingreift. An den Schaltelementen, die als Schaltschwingen 28 bzw. Schubgabeln ausgebildet sind, sind Sperrelemente 74 quer zum Sperrblech 32 angeordnet, welche in Querrichtung versetzt zueinander angeordnete Längsnuten 76 aufweisen. In Fig. 3 ist die Ölauffangrinne 34 mit ihren hier gezeigten Öffnungen 36 und 38 auf dem Sperrblech 32 befestigt.

Beim Wählen einer Gasse, d. h. durch Verdrehen der zentralen Schaltwelle 50 wird also über den Mitnehmerstift 54 die Hebelnabe 52 verdreht. Über das zwischen der Hebelnabe 52 und dem starren Schubglied 62 des Sperrbleches 32 angeordnete Schub-Dreh-Gelenk wird die Drehbewegung in eine Längsbewegung umgewandelt und das Sperrblech 32 auf seinen Führungsbolzen 30 quer zur zentralen Schaltwelle 50 in Abhängigkeit von der Drehstellung der zentralen Schaltwelle 50 bewegt. Dadurch bewegt sich auch die Ölauffangrinne 34 entlang des Pfeils 78. Die Ausnehmungen 58 im Sperrblech 32 greifen über die Sperrelemente 74 an den Schaltschwingen 28. In den Bereichen zwischen den einzelnen Schaltgassen überdecken sich die Sperrflächen an den Ausnehmungen 58 mit den Sperrflächen der Sperrelemente 74 an allen Schaltschwingen 28. Ist der Verdrehweg für das Erreichen einer Schaltgasse zurückgelegt, so fluchtet das Sperrblech 32 mit der entsprechenden Längsnut 76 des Sperrelementes 74 der jeweiligen Schaltschwinge 28, welche den oder die Gänge in der vorgewählten Schaltgasse schaltet. Damit ist die Schaltschwinge 28 bzw. die Schubgabel in Längsrichtung frei und kann geschaltet werden. Bei allen anderen Schaltschwingen bzw. Schubgabeln überdecken sich die Sperrflächen am Sperrblech 32 mit den Sperrflächen an den Sperrelementen 74 der Schwingen, da die Längsnuten 76 in den Sperrelementen 74 entsprechend dem Wähl-Drehweg versetzt zueinander angeordnet sind. Diese Schaltschwingen 28 bzw. Schubgabeln sind somit arretiert.

Zum Schalten eines Ganges wird die zentrale Schaltwelle 50 relativ zum Gehäuse 4,6 und damit zum Sperrblech 32 in Längsrichtung verschoben. Der Aufbau der Verriegelung erfordert eine in Längsrichtung feststehende Hebelnabe 52. Zu diesem Zweck ist die Hebelnabe 52 über den gehäusefesten Arretierstift 56 in Längsrichtung festgesetzt. Beim Verdrehen der zentralen Schaltwelle 50 hingegen wird die Hebelnabe 52 in ihrer äußeren bogenförmigen Nut 72 am Arretierstift 56 entlanggeführt. Beim Verschieben der zentralen Schaltwelle 50 gleitet der Mitnehmerstift 54 in den Längsnuten 70 am Innendurchmesser der Hebelnabe 52 entlang.

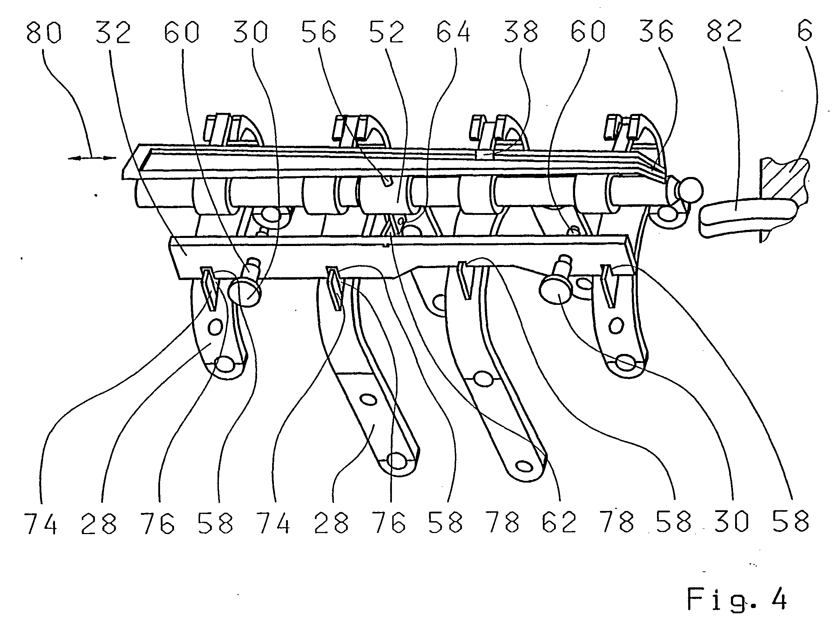

In der Fig. 4 ist die Ölauffangrinne an der Schaltwelle 50 befestigt und wird entsprechend des Pfeils 80 in Schaltrichtung bewegt. Eine weitere Ölauffangrinne 82, die hier schematisch dargestellt im Getriebegehäuse 6 angeordnet ist, wird von der entlang des Pfeils 80 sich bewegenden Ölauffangrinne 34 nur in bestimmten Stellungen der Schaltwelle 50 erreicht und kann nur dann über die Öffnung 36 Öl an die weitere Ölauffangrinne 82 abgeben.

### Bezugszeichen

- 2: Schaltgetriebe
- 4: Gehäusehinterteil
- 6: Gehäusevorderteil
- 8: Hauptwelle
- 10: Festrad
- 12: Losrad
- 14: Vorgelegewelle
- 16: Festrad
- 18: Losrad
- 20: Antriebswelle
- 22: Rückwärtsgangzwischenrad
- 24: Schottblech
- 26: Lagerbolzen
- 28: Schaltschwinge
- 30: Führungsbolzen
- 32: Sperrblech
- 34: Ölauffangrinne
- 36: Ölabgang
- 38: Ölabgang
- 40: Ruhelage
- 42: Ölbereich
- 44: Ölbereich
- 46: Ölspiegel
- 48: Ölspiegel
- 50: Schaltwelle
- 52: Hebelnabe
- 54: Mitnehmerstift
- 56: Arretierstift
- 58: Aussparung
- 60: Führungshülse
- 62: Schubglied
- 64: Bolzen
- 66: Verlängerungsteil
- 68: Langloch
- 70: Nut
- 72: Aussparung
- 74: Sperrelement
- 76: Längsnut,
- 78: Pfeil
- 80: Pfeil
- 82: Ölauffangrinne

## Patentansprüche

1. Ölversorgungseinrichtung (34, 36, 38) für ein ein Getriebegehäuse (4, 6) aufweisendes Fahrzeuggetriebe (2) mit auf Wellen (8, 14, 20) angeordneten Rädern (10, 12, 16, 18, 22), die Verzahnungen aufweisen, mit Lagerungen, in denen Räder (10, 12, 16, 18, 22) und Wellen (8, 14, 20) drehbar gelagert sind, und mit einer Schalteinrichtung (30, 32, 50), die dazu geeignet ist, die Räder (10, 12, 16, 18, 22) und Wellen (8, 14, 20) zu einer Drehmomentübertragung zu verbinden, **dadurch gekennzeichnet, dass** eine auf bewegbaren Elementen (32, 50) der Schalteinrichtung (30, 32, 50) anbingbaren Ölauffangrinne (34) vorgesehen ist, die mit den Elementen (32, 50) der Schalteinrichtung (30, 32, 50) bewegen kann und die sich im wesentlichen durch den gesamten Räder (10, 12, 16, 18, 22) aufweisenden Teil im Getriebegehäuse (4, 6) erstrecken kann und die wenigstens eine Öffnung (36, 38) aufweist, die bei den Bewegungen der Elemente (32, 50) der Schalteinrichtung (30, 32, 50) Bereiche innerhalb des Getriebegehäuses (4, 6) überstreicht, an denen die Lagerungen und Verzahnungen angeordnet sind.

2. Ölversorgungseinrichtung (34, 36, 38) nach Anspruch 1, **dadurch gekennzeichnet, dass** im Getriebegehäuse (4, 6) im Bereich einer Ölwanne eine Trenneinrichtung (24) vorgesehen sein kann, die einen ersten Bereich (42) mit einem geringeren Ölspiegel (48) von einem zweiten Bereich (44) mit einem höheren Ölspiegel (46) trennt und die Ölauffangrinne (34) aufgespritztes Öl aus dem ersten Bereich (42) mit dem geringeren Ölspiegel (48) in den zweiten Bereich (44) mit dem höheren Ölspiegel (46) fördert.

3. Ölversorgungseinrichtung (34, 36, 38) nach Anspruch 1 oder 2, **dadurch gekennzeichnet, dass** wenigstens die eine der Öffnungen (36, 38) der Ölauffangrinne (34) so angeordnet ist, dass sie wenigstens in einer definierten Position ihrer Bewegung Öl in eine zweite Ölauffangrinne (82) abgeben kann, die bewegungsfest im Getriebegehäuse (4, 6) oder an einem Schaltungselement angeordnet ist.

4. Ölversorgungseinrichtung (34, 36, 38) nach einem der Ansprüche 1 bis 3, **dadurch gekennzeichnet, dass** die Ölauffangrinne (34) ein Gefälle aufweist, so dass das Öl in Normallage des Getriebes (2) schwerkraftunterstützt in der Ölauffangrinne (34) fließen kann.

5. Ölversorgungseinrichtung (34, 36, 38) nach einem der Ansprüche 1 bis 4, **dadurch gekennzeichnet, dass** die Bewegung der Ölauffangrinne (34) in Längsrichtung des Getriebegehäuses (4, 6) erfolgt entlang der Drehachsen der Wellen (8, 14, 20).

6. Ölversorgungseinrichtung (34, 36, 38) nach Anspruch 5, **dadurch gekennzeichnet, dass** die Ölauffangrinne (34) auf einer in Längsrichtung des Getriebegehäuses (4, 6) bewegbaren Schaltwelle (50) montiert ist.

7. Ölversorgungseinrichtung (34, 36, 38) nach einem der Ansprüche 1 bis 4, **dadurch gekennzeichnet, dass** die Bewegung der Ölauffangrinne (34) rechtwinklig zur Längsrichtung des Getriebegehäuses (4, 6) und somit rechtwinklig zu den Drehachsen der Wellen (8, 14, 20) erfolgt.

8. Ölversorgungseinrichtung (34, 36, 38) nach Anspruch 7, **dadurch gekennzeichnet, dass** die Ölauffangrinne (34) auf einem Sperrblech (32) montiert ist, das zur Sperrung von nicht zum Schalten ausgewählter Schaltgabeln der Schalteinrichtung (30, 32, 50) vorgesehen ist und das rechtwinklig zur Längsrichtung des Getriebegehäuses (4, 6) bewegbar ist.

9. Ölversorgungseinrichtung (34, 36, 38) nach einem der Ansprüche 1 bis 8, **dadurch gekennzeichnet, dass** die Ölauffangrinne (34) aus einem widerstandsfähigen Kunststoff gebildet ist.

## Claims

1. Oil supply device (34, 36, 38) for a vehicle transmission (2) having a transmission housing (4, 6) with wheels (10, 12, 16, 18, 22), which are disposed on shafts (8, 14, 20) and have gear teeth, with bearings, in which wheels (10, 12, 16, 18, 22) and shafts (8, 14, 20) are rotatably mounted, and with a gear shift device (30, 32, 50), which is suitable for connecting the wheels (10, 12, 16, 18, 22) and shafts (8, 14, 20) in order to transmit torque, **characterized in that** an oil collecting channel (34) is provided, which is mountable on movable elements (32, 50) of the gear shift device (30, 32, 50) and may move with the elements (32, 50) of the gear shift device (30, 32, 50) and which may extend substantially through the entire part having wheels (10, 12, 16, 18, 22) in the transmission housing (4, 6) and which has at least one opening (36, 38), which during the movements of the elements (32, 50) of the gear shift device (30, 32, 50) sweeps over regions inside the transmission housing (4, 6) where the bearings and gear teeth are disposed.

2. Oil supply device (34, 36, 38) according to claim 1, **characterized in that** in the transmission housing (4, 6) in the region of an oil sump a separation device (24) may be provided, which separates a first region (42) with a lower oil level (48) from a second region (44) with a higher oil level (46) and the oil collecting channel (34) conveys applied oil spray from the first region (42) with the lower oil level (48) into the second region (44) with the higher oil level (46).

3. Oil supply device (34, 36, 38) according to claim 1 or 2, **characterized in that** at least the one of the openings (36, 38) of the oil collecting channel (34) is disposed in such a way that at least in one defined position of its movement it may deliver oil into a second oil collecting channel (82), which is disposed in a motionally fixed manner in the transmission housing (4, 6) or on a gear shift element.

4. Oil supply device (34, 36, 38) according to one of claims 1 to 3, **characterized in that** the oil collecting channel (34) has a descending gradient, so that the oil in normal position of the transmission (2) may flow in a gravity-assisted manner in the oil collecting channel (34).

5. Oil supply device (34, 36, 38) according to one of claims 1 to 4, **characterized in that** the movement of the oil collecting channel (34) in longitudinal direction of the transmission housing (4, 6) occurs along the axes of rotation of the shafts (8, 14, 20).

6. Oil supply device (34, 36, 38) according to claim 5, **characterized in that** the oil collecting channel (34) is mounted on a gear change shaft (50), which is movable in longitudinal direction of the transmission housing (4, 6).

7. Oil supply device (34, 36, 38) according to one of claims 1 to 4, **characterized in that** the movement of the oil collecting channel (34) occurs at right angles to the longitudinal direction of the transmission housing (4, 6) and hence at right angles to the axes of rotation of the shafts (8, 14, 20).

8. Oil supply device (34, 36, 38) according to claim 7, **characterized in that** the oil collecting channel (34) is mounted on a locking plate (32), which is provided for locking selection forks of the gear shift device (30, 32, 50) that are not selected for shifting and which is movable at right angles to the longitudinal direction of the transmission housing (4, 6).

9. Oil supply device (34, 36, 38) according to one of claims 1 to 8, **characterized in that** the oil collecting channel (34) is formed from a resistant plastics material.

## Revendications

1. Équipement d'alimentation en huile (34, 36, 38) pour une boîte de vitesses de véhicule (2) étant dotée d'un carter de boîte de vitesses (4, 6), la boîte de vitesses étant équipée de pignons (10, 12, 16, 18, 20) disposés sur des arbres (8, 14, 20), ces pignons comportant des dentures, avec des logements, dans lesquels sont logés des pignons (10, 12, 16, 18, 22) et des arbres (8, 14, 20) pivotables et d'un dispositif de changement de vitesses (30, 32, 50) étant approprié à lier les pignons (10, 12, 16, 18, 22) et les arbres (8, 14, 20) de manière à ce que ceux-ci puissent transmettre le couple, **caractérisé en ce qu'**est prévue une goulotte collectrice d'huile (34) applicable sur des éléments mobiles (32, 50) du dispositif de changement de vitesses (30, 32, 50), cette goulotte pouvant se déplacer avec les éléments (32, 50) du dispositif de changement de vitesses (30, 32, 50) et qui peut s'étendre essentiellement sur toute la partie du carter de boîte de vitesses (4, 6) comportant des pignons (10, 12, 16, 18; 22), et qui comporte au moins un orifice (36, 38) lubrifiant lors du déplacement des éléments (32, 50) du dispositif de changement de vitesses (30, 32, 50) des zones à l'intérieur du carter de boîte de vitesses (4, 6) dans lesquelles se trouvent les logements et les dentures.

2. Équipement d'alimentation en huile (34, 36, 38) selon la revendication 1, **caractérisé en ce que** à l'intérieur du carter de boîte de vitesses (4, 6) peut être prévu un équipement de séparation (24) situé dans la zone d'un bac à huile, séparant une première zone (42) ayant un niveau d'huile bas (48) d'une deuxième zone (44) ayant un niveau d'huile plus élevé (46), et **en ce que** la goulotte collectrice d'huile (34) refoule de l'huile projetée de la première zone (42) ayant un niveau d'huile bas (48) vers la deuxième zone (44) ayant un niveau d'huile plus élevé (46).

3. Équipement d'alimentation en huile (34, 36, 38) selon une des revendications 1 ou 2, **caractérisé en ce que** au moins un des orifices (36, 38) de la goulotte collectrice d'huile (34) est disposé de manière à ce qu'elle puisse, lorsqu'elle se déplace et au moins dans une position définie, céder de l'huile dans une deuxième goulotte collectrice d'huile (82), celle-ci étant disposée de manière fixe dans le carter de boîte de vitesses (4, 6) ou sur un des éléments de changement de vitesses.

4. Équipement d'alimentation en huile (34, 36, 38) selon une des revendications 1 à 3, **caractérisé en ce que** la goulotte collectrice d'huile (34) présente une déclivité, permettant à l'huile de couler à l'aide de la gravité dans la goulotte collectrice d'huile (34) lorsque la boîte de vitesses (2) se trouve en position normale.

5. Équipement d'alimentation en huile (34, 36, 38) selon une des revendications 1 à 4, **caractérisé en ce que** le mouvement de la goulotte collectrice d'huile (34) s'effectue en sens longitudinal du carter de boîte de vitesses (4, 6) et suivant les axes de rotation des arbres (8, 14, 20).

6. Équipement d'alimentation en huile (34, 36, 38) selon la revendication 5, **caractérisé en ce que** la goulotte collectrice d'huile (34) est montée sur un arbre de commande (50) mobile en sens longitudinal du carter de boîte de vitesses (4, 6).

7. Équipement d'alimentation en huile (34, 36, 38) selon une des revendications 1 à 4, **caractérisé en ce que** le mouvement de la goulotte collectrice d'huile (34) s'effectue perpendiculairement au sens longitudinal du carter de boîte de vitesses (4, 6) et ainsi perpendiculairement aux axes de rotation des arbres (8, 14, 20).

8. Équipement d'alimentation en huile (34, 36, 38) selon la revendication 7, **caractérisé en ce que** la goulotte collectrice d'huile (34) est montée sur une tôle de verrouillage (32) prévue pour le blocage des fourchettes de commande de l'équipement de changement de vitesses (30, 32, 50) qui ne sont pas sélectionnées pendant le processus de changement de vitesses, et laquelle peut être déplacée perpendiculairement et en sens longitudinal du carter de boîte de vitesses (4, 6).

9. Équipement d'alimentation en huile (34, 36, 38) selon une des revendications 1 à 8, **caractérisé en ce que** la goulotte collectrice d'huile (34) est réalisée d'une matière plastique résistante.
